# EUROPÄISCHE PATENTSCHRIFT

(11) **EP 1 129 611 B1**
(45) Veröffentlichungstag und Bekanntmachung des Hinweises auf die Patenterteilung: **30.07.2008**
(21) Anmeldenummer: 01101884.3
(22) Anmeldetag: 27.01.2001
(51) Int. Cl.: A01F 15/07

(54) **Rollballenpresse für landwirtschaftliche Halmgüter**
Rotobaler for agricultural products
Presse à balles rondes pour des produits agricoles

(30) Priorität: 02.02.2000 DE 10004564
(43) Veröffentlichungstag der Anmeldung: 05.09.2001
(73) Patentinhaber: Welger Maschinenfabrik GmbH, 38304 Wolfenbüttel (DE)
(72) Erfinder: Honhold, Joost, 38302 Wolfenbüttel (DE)

(56) Entgegenhaltungen:
- DE-A- 19 711 164
- US-A- 4 569 439
- US-A- 4 956 959
- US-A- 5 181 368

## Beschreibung

Die Erfindung betrifft eine Rollballenpresse für landwirtschaftliche Halmgüter nach dem Oberbegriff des Patentanspruches 1.

Die DE 197 11 164 A1 offenbart eine Rollballenpresse mit einer Ladeeinrichtung zur Erleichterung der Beschickung einer Abrollstation mit Materialbahnrollen. Die ortsfest an der Rollballenpresse gelagerte Ladeeinrichtung ist aus einer verriegelbaren Ruheposition, in der sich diese parallel zu einer Pressenseitenwand befindet, etwa 90° um eine vertikale Achse in eine Übergabeposition schwenkbar. In dieser Übergabeposition oder in angehobener Position soll die Materialbahnrolle dann von Hand aus der Ladeeinrichtung in die Abrollstation geschoben werden. Nachteilig hierbei ist, dass die etwa 40 kg schwere und ca. 130 cm lange Materialbahnrolle trotzdem immer noch umständlich, nämlich seitlich von der Ladeeinrichtung, in die Abrollstation geschoben werden muss. Darüber hinaus hat die vorbekannte Ladeeinrichtung den großen Nachteil, dass die Materialbahnrolle erst von Hand zur Rollballenpresse getragen werden muss, wozu teilweise zwei Personen benötigt werden, abgesehen von dem hohen Kraftaufwand.

Der Erfindung liegt die Aufgabe zugrunde, die Transportkette der Materialbahnrollen von deren Lagerort bis zur Rollballenpresse zu verbessern.

Diese Aufgabe wird erfindungsgemäß gelöst durch eine leicht von der Rollballenpresse abnehmbare und leicht an die Rollballenpresse anhängbare, fahrbar ausgestaltete Transporteinrichtung für die Materialbahnrolle. Vorteilhafte Weiterbildungen ergeben sich aus den Unteransprüchen.

Auf diese Weise läßt sich der gesamte Materialbahnrollentransport vom Lagerort der Materialbahnrolle bis zu deren Verwendung in der Abrollstation mit minimalem Kraftaufwand und mit nur einer einzigen, einfachen Einrichtung darstellen.

Nachstehend wird eine Ausführungsform der Erfindung anhand der Zeichnung beschrieben. Es zeigt:
- Fig. 1: eine Vorderansicht auf eine Rollballenpresse mit einer erfindungsgemäßen, in Strichlinie dargestellten Transporteinrichtung - beladen mit einer Materialbahnrolle - während des Transports zur Rollballenpresse und in Volllinie gezeichneter Stellung angehängt an die Rollballenpresse vor dem Einschieben in eine Abrollstation und
- Fig. 2: eine schematische Teilseitenansicht auf ein Vordergehäuse der Rollballenpresse mit einer Materialbahnrolle in der Abrollstation und mit einer Vorratsrolle auf der Transporteinrichtung in eingeschobener Position in einer Vorratsstation der Rollballenpresse,
- Fig. 3: eine Führungsschiene im Querschnitt mit aufgesetztem Laufrad der Transporteinrichtung in der Abrollstation und
- Fig. 4: eine Führungsschiene in Draufsicht mit einer Verriegelungsklinke zum Arretieren der Transporteinrichtung in der Abroll- oder Vorratsstation.

Die Rollballenpresse hat ein allgemein mit 1 beziffertes Fahrgestell mit Rädern 2, welches über eine Zugdeichsel 3 an einen nicht dargestellten Schlepper anzuhängen ist. Den Rädern 2 ist in Arbeitsrichtung der Rundballenpresse eine mit 4 bezifferte Aufnahmevorrichtung (Pick-up) üblicher Bauart vorgeordnet. Auf dem Fahrgestell 1 ist ein allgemein mit 5 beziffertes Pressraumgehäuse angeordnet, bestehend aus einem gestellfesten Vordergehäuse 6 mit vorderen Seitenwänden 7, 8 und einem gelenkig mit dem Vordergehäuse 6 verbundenen, nicht dargestellten Hintergehäuse, welches nach Formung eines Ballens um eine obere Schwenkachse zum Ballenausstoß aufklappbar ist.

Zwischen sich gegenüberliegenden, einander entsprechenden Seitenwänden 7, 8 erstrecken sich Presselemente in Form von Walzen 9, die umfangsseitig einen Pressraum 10 begrenzen. Es können aber auch Riemen, Stabförderketten oder Kombinationen davon sein. Desgleichen kann der Pressraum 10 einer Bauart mit konstantem oder variablem Pressraumdurchmesser sein. Der Antrieb der Presselemente erfolgt durch eine nicht dargestellte, mit einem Hauptgetriebe gekoppelte Gelenkwelle vom Schlepper aus.

Oberhalb der Presswalzen 9 ist eine Umhüllvorrichtung 11 vorgesehen, mittels welcher eine Mantelbahn durch einen Spalt 12 zwischen zwei Presswalzen 9 dem Pressraum 10 zuführbar ist, um einen fertig gepressten Rundballen formfixierend zu umhüllen. Die Mantelbahn, z. B. Netz oder Folie, wird in einer Abrollstation 13 von einer Materialbahnrolle 14 abgezogen, welche bei bekannten Abrollstationen in einem kastenförmigen Behälter 15 so gelagert ist, dass ihre Rotationsachse 16 parallel zur Zylinderachse 17 des Pressraumes 10 verläuft.

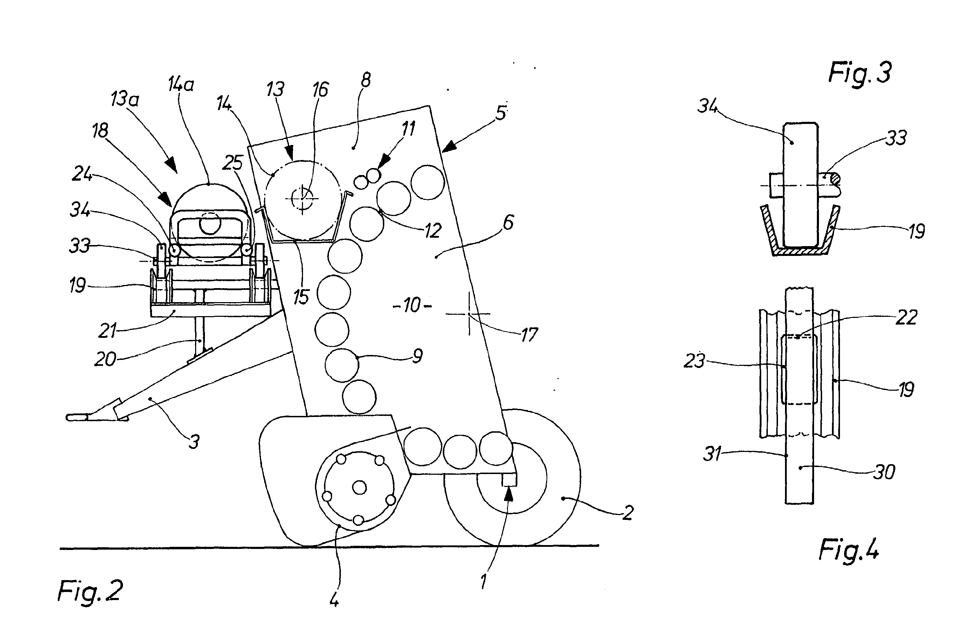

Neu ist eine Transporteinrichtung 18, welche auf parallel zur Zylinderachse 17 des Pressraumes 10 angeordneten Führungen 19 direkt von der Seite der Rollballenpresse her vor die Umhüllvorrichtung 11 schiebbar ist. Die Transporteinrichtung 18 und die Führungen 19 können aber auch dem an unveränderter Stelle angeordneten Behälter 15 als Vorratsstation 13a für eine Vorratsrolle 14a unmittelbar vorgelagert sein, wie am besten aus Fig. 2 ersichtlich, oder es können statt eines Behälters 15 und einer Transporteinrichtung 18 auch zwei Transporteinrichtungen nebeneinander oder übereinander angeordnet sein.

Die Führungen 19 haben einen trapezförmigen Querschnitt, wie aus Fig. 3 ersichtlich, sind in einem Abstand parallel nebeneinander angeordnet, der größer ist als der Durchmesser der Materialbahnrolle 14 und stützen sich über Tragwinkel 20 auf der Zugdeichsel 3 und am Vordergehäuse 6 ab. Auf der Einschubseite der Ladeeinrichtung 18 sind die Führungen 19 etwa um 45° nach unten abgewinkelt und durch ein Winkeleisen 21 verbunden, dessen freie Schenkel nach oben weisen, um eine Haltekante 22 der Ladeeinrichtung 18 dort einzuhängen. Am anderen Ende weist jede Führung 19 rechteckförmige Ausnehmungen 23 auf, welche die Haltekante 22 durchgreift zum Arretieren der Ladeeinrichtung 18 in der Abroll- 13 oder Vorratsstation 13a, s. Fig. 4.

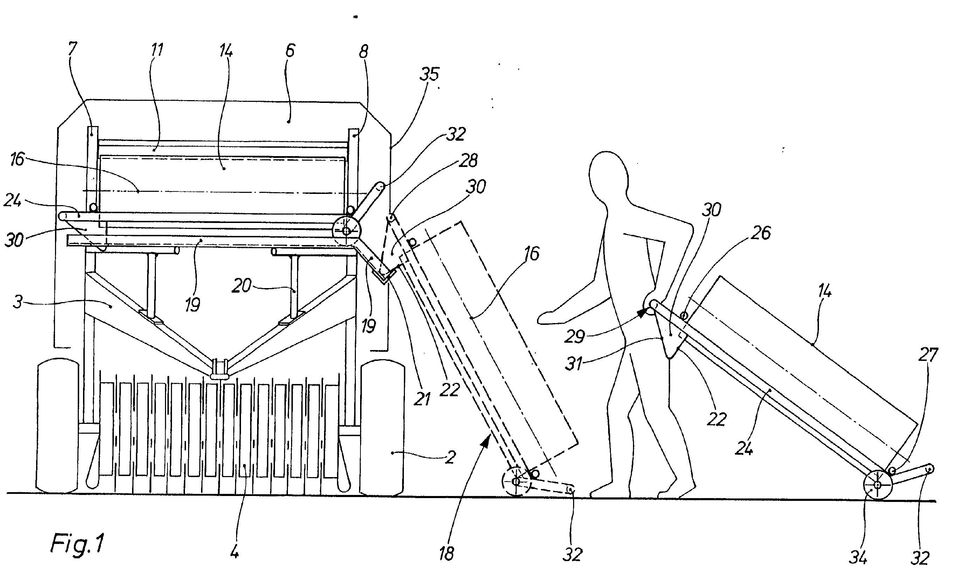

Die Transporteinrichtung 18 besteht aus einem rechteckförmigen Rohrrahmen, welcher zwischen sich die Materialbahnrolle 14 so aufnimmt, dass sich diese auf zwei Längsrohren 24, 25 abstützt, welche in einem seitlichen Abstand voreinander angeordnet sind, welcher kleiner ist als der Durchmesser der Materialbahnrolle 14, während die Materialbahnrolle 14 in axialer Richtung jeweils durch einen an den Stirnseiten angreifenden Anschlag 26, 27 gegen Verrutschen gehalten wird. Die Längsrohre 24, 25 sind auf der Einschubseite der Transporteinrichtung 18 länger ausgeführt als dies der Länge der Materialbahnrolle 14 entspricht und durch ein Querrohr 28 miteinander verbunden, welches gleichzeitig einen Handgriff 29 bildet. An den überstehenden Rohrabschnitten ist jeweils eine nach unten weisende Nase 30 befestigt, die rechtwinklig zum Rohr 24, 25 eine Haltekante 22 zum Halten der in das Winkeleisen 21 eingehängten Transporteinrichtung 18 aufweist und eine Auflaufschräge 31 zum Verschieben auf den Führungen 19. Anstelle der Nase 30 können bei entsprechender Gestaltung des Winkeleisens 21 auch Laufräder verwendet werden. Auf der der Einschubseite gegenüberliegenden Seite der Transporteinrichtung 18 sind beide Längsrohre 24, 25 etwa auf Höhe der Stirnseite der Materialbahnrolle 14 ca. 45° nach oben abgewinkelt und weisen endseitig ein Querrohr 32 als Verbindung auf, welches ebenfalls als Handgriff ausgebildet ist. Beide Längsrohre 24, 25 weisen unterhalb des Anschlages 27 jeweils nach außen weisende, rechtwinklig zu den Rohraußenseiten angeordnete Achsstummel 33 mit Laufrädern 34 auf, die so angeordnet sind, dass die Transporteinrichtung 18 gemäß gestrichelter Darstellung in Fig. 1 in entnommenem Zustand auf dem Erdboden zum Transport der Materialbahnrolle 14 verfahrbar und mit der Materialbahnrolle 14 in die Abroll- 13 oder Vorratsstation 13a einschiebbar ist.

Die Funktion der Transporteinrichtung 18 ist wie folgt: Ist eine Materialbahnrolle 14 in der Rollballenpresse aufgebraucht, so wird die Transporteinrichtung 18 aus der Abroll- 13 bzw. der Vorratsstation 13a herausgezogen, zum Lagerort der Materialbahnrollen gefahren und dort mit einer Materialbahnrolle 14 beladen. Die relativ schwere, sperrige Materialbahnrolle 14 wird mittels der in Fig. 1 in Strichlinie dargestellten Transporteinrichtung 18 leicht an einer Hand zur Rollballenpresse gefahren und dort mit ihrer Haltekante 22 in das Winkeleisen 21 eingehängt. Die Transporteinrichtung 18 wird an dem Handgriff 32 in eine etwa horizontale Position bewegt und auf den Führungen 19 in die Abroll- 13 bzw. Vorratsstation 13a geschoben. Zum Anheben und/oder Einschieben der Transporteinrichtung 18 können auch nicht dargestellte Hilfsantriebe eingesetzt werden. Damit dient eine einzige Transporteinrichtung 18 einerseits als Transportmittel der Materialbahnrolle 14, 14a von deren Lagerort zur Rollballenpresse und andererseits zum Einschieben der Materialbahnrolle 14, 14a in die Abroll- 13 oder Vorratsstation 13a.

## Patentansprüche

1. Rollballenpresse für landwirtschaftliche Halmgüter mit einer Ladeeinrichtung (18) für eine Materialbahnrolle (14,14a), **gekennzeichnet durch** eine leicht von der Rollballenpresse abnehmbare und leicht an die Rollballenpresse anhängbare, fahrbar ausgestaltete Transporteinrichtung (18) für die Materialbahnrolle (14, 14a).

2. Rollballenpresse nach Anspruch 1, **dadurch gekennzeichnet, dass** im einschubseitigen Bereich der Seitenwand (8) der Rollballenpresse eine Halterung (21) für die Transporteinrichtung (18) vorgesehen ist.

3. Rollballenpresse nach einem der vorhergehenden Ansprüche, **dadurch gekennzeichnet, dass** die Transporteinrichtung (18) als Tragelement (24, 25, 28, 32) für die Materialbahnrolle (14, 14a) ausgebildet ist und Mittel (26, 27) vorgesehen sind, welche die Materialbahnrolle (14, 14a) wenigstens an den Stirnseiten gegen Wegrutschen in axialer Richtung halten.

4. Rollballenpresse nach einem der vorhergehenden Ansprüche, **dadurch gekennzeichnet, dass** die Transporteinrichtung (18) wenigstens einen Handgriff (29, 32) und Laufräder (34) aufweist.

5. Rollballenpresse nach einem der vorhergehenden Ansprüche, **dadurch gekennzeichnet, dass** nur die Materialbahnrolle (14, 14 a) von der Transporteinrichtung (18) in eine Abroll- (13) und/oder Vorratsstation (13a) überführbar ist.

6. Rollballenpresse nach einem der vorhergehenden Ansprüche 1 bis 4, **dadurch gekennzeichnet, dass** die Materialbahnrolle (14, 14a) zusammen mit der Transporteinrichtung in die Abroll- (13) oder Vorratsstation (13a) bewegbar ist.

7. Rollballenpresse nach Anspruch 6, **dadurch gekennzeichnet, dass** Führungen (19) zum Verschieben der Transporteinrichtung (18) in der Rollballenpresse vorgesehen sind.

8. Rollballenpresse nach einem der vorhergehenden Ansprüche, **dadurch gekennzeichnet, dass** Hilfsantriebe vorgesehen sind, um die Transporteinrichtung aus einer geneigten Position in eine horizontale Position anzuheben.

9. Rollballenpresse nach einem der vorhergehenden Ansprüche, **dadurch gekennzeichnet, dass** Hilfsantriebe vorgesehen sind zum Einschieben der Materialrolle (14, 14a) und/oder der Transporteinrichtung (18) in die Abroll- (13) oder Vorratsstation (13a).

## Claims

1. A roll baler for agricultural stalk materials having a loading device (18) for a roll of a strip of material (14, 14a), **characterized by** a conveying device (18) - capable of being easily removed from the roll baler, capable of being easily attached to the roll baler and designed so as to be movable - for the roll of the strip of material (14, 14a).

2. A roll baler according to Claim 1, **characterized in that** a holding means (21) for the conveying device (18) is provided in the insertion region of the lateral wall (8) of the roll baler.

3. A roll baler according to one of the preceding Claims, **characterized in that** the conveying device (18) is constructed in the form of a support element (24, 25, 28, 32) for the roll of the strip of material (14, 14a), and means (26, 27) are provided which hold the roll of the strip of material (14, 14a) at least on the end faces so as to prevent sliding away in the axial direction.

4. A roll baler according to any one of the preceding Claims, **characterized in that** the conveying device (18) has at least one handle (29, 32) and running wheels (34).

5. A roll baler according to any one of the preceding Claims, **characterized in that** only the roll of the strip of material (14, 14a) is capable of being transferred from the conveying device (18) into a rolling station (13) and/or a reserve station (13a).

6. A roll baler according to any one of the preceding Claims 1 to 4, **characterized in that** the roll of the strip of material (14, 14a) is capable of being moved together with the conveying device into the rolling station (13) or the reserve station (13a).

7. A roll baler according to Claim 6, **characterized in that** guides (19) are provided for displacing the conveying device (18) in the roll baler.

8. A roll baler according to any one of the preceding Claims, **characterized in that** auxiliary drives are provided in order to lift the conveying device out of an inclined position into a horizontal position.

9. A roll baler according to any one of the preceding Claims, **characterized in that** auxiliary drives are provided in order to insert the roll of material (14, 14a) and/or the conveying device (18) into the rolling station (13) or the reserve station (13a).

## Revendications

1. Presse à balles rondes pour produits en tige agricoles dotée d'un dispositif de chargement (18) pour un rouleau de bande de matière (14, 14a), **caractérisée par** un dispositif de transport (18) pour le rouleau de bande de matière (14, 14a) pouvant être enlevé facilement de la presse à balles rondes et pouvant être facilement accroché à celle-ci, conçu de manière mobile.

2. Presse à balles rondes selon la revendication 1, **caractérisée en ce qu'**une fixation (21) pour le dispositif de transport (18) est prévue dans la zone côté introduction de la paroi latérale (8) de la presse à balles rondes.

3. Presse à balles rondes selon l'une quelconque des revendications précédentes, **caractérisée en ce que** le dispositif de transport (18) est réalisé comme un élément porteur (24, 25, 28, 32) pour le rouleau de bande de matière (14, 14a) et des moyens qui maintiennent le rouleau de bande de matière (14, 14a) au moins sur les côtés frontaux contre tout glissement dans le sens axial, sont prévus.

4. Presse à balles rondes selon l'une quelconque des revendications précédentes, **caractérisée en ce que** le dispositif de transport (18) présente au moins une poignée (29, 32) et des roues de roulement (34).

5. Presse à balles rondes selon l'une quelconque des revendications précédentes, **caractérisée en ce que** seul le rouleau de bande de matière (14, 14a) peut être transféré par le dispositif de transport (18) dans un poste de déroulement (13) et/ou de réserve (13a).

6. Presse à balles rondes selon l'une quelconque des revendications précédentes 1 à 4, **caractérisée en ce que** le rouleau de bande de matière (14, 14a) peut être déplacé conjointement avec le dispositif de transport dans le poste de déroulement (13) ou de réserve (13a).

7. Presse à balles rondes selon la revendication 6, **caractérisée en ce que** des guidages (19) sont prévus pour le déplacement du dispositif de transport (18) dans la presse à balles rondes.

8. Presse à balles rondes selon l'une quelconque des revendications précédentes, **caractérisée en ce que** des entraînements auxiliaires sont prévus afin de relever le dispositif de transport depuis une position inclinée dans une position horizontale.

9. Presse à balles rondes selon l'une quelconque des revendications précédentes, **caractérisée en ce que** des entraînements auxiliaires sont prévus afin d'introduire le rouleau de matière (14, 14a) et/ou le dispositif de transport (18) dans le poste de déroulement (13) ou de réserve (13a).
